# EUROPÄISCHE PATENTSCHRIFT

(11) **EP 0 866 023 B1**
(45) Veröffentlichungstag und Bekanntmachung des Hinweises auf die Patenterteilung: **31.07.2002**
(21) Anmeldenummer: 97115314.3
(22) Anmeldetag: 04.09.1997
(51) Int. Cl.: B66D 1/02, B66D 1/54, B66D 3/26

(54) **Vorrichtung zum Ausgleich des Gewichtes einer hängenden Last**
Device for compensating the weight of a hanging load
Dispositif pour équilibrer le poids d'une charge suspendue

(30) Priorität: 15.03.1997 DE 29704761 U
(43) Veröffentlichungstag der Anmeldung: 23.09.1998
(73) Patentinhaber: Carl Stahl Kromer GmbH, 79115 Freiburg (DE)
(72) Erfinder: Heinemann, Albert, 79238 Ehrenkirchen-Scherzingen (DE)
(74) Vertreter: Patent- und Rechtsanwaltssozietät, Maucher, Börjes & Kollegen

(56) Entgegenhaltungen:
- DE-A- 2 559 300
- DE-A- 3 933 505
- DE-U- 29 519 208
- FR-A- 2 261 172
- FR-A- 2 521 541
- US-A- 4 083 510

## Beschreibung

Die Erfindung betrifft eine Vorrichtung zum Ausgleich des Gewichtes einer hängenden Last, insbesondere eines von Hand zu bedienenden Werkzeuges, zum Beispiel einer Schweißzange, in Form eines Gewichtsausgleichers oder Federzuges, wobei die Vorrichtung eine Seiltrommel und ein gegen die Kraft einer als Gewichtsausgleich dienenden Feder davon abwickelbares Tragseil sowie ein Gehäuse aufweist, in welchem die Seiltrommel drehbar gelagert ist und welches einen Durchtritt für das tangential von der Seiltrommel aus nach unten austretende Tragseil hat, wobei die Seiltrommel insbesondere einen vom Ende des Tragseilwickels bis zu der Seite des beim Ablassen des Tragseiles zuletzt abzuwickelnden Seilteiles zunehmenden Durchmesser aufweist.

Eine derartige Gewichtsausgleichvorrichtung ist beispielsweise aus DE-25 59 300 C2 bekannt und hat sich bewährt. Dabei besteht jedoch das Problem, daß das Tragseil nach einer gewissen Zeit daraufhin überprüft werden müßte, ob es noch die volle Tragfähigkeit hat, um den Sicherheitsanforderungen zu genügen, oder ob es Schäden aufweist, die einen Austausch erforderlich machen. Eine solche Überprüfung unterbleibt nicht selten oder ist als Prüfung nur durch Augenschein zu ungenau.

Es ist deshalb auch möglich, das Tragseil zum Beispiel nach einer vorgegebenen Zeit unabhängig davon auszutauschen, ob die tatsächlich notwendig ist oder nicht, was vor allem dann einen unnötigen Kostenaufwand bedeutet, wenn das Trag seil eigentlich noch in Ordnung ist.

Will man ein solches Tragseil möglichst lange Zeit benutzen, müssen Sicherheitsvorkehrungen getroffen werden, um ein plötzliches Reißen mit einer entsprechenden Unfallgefahr zu vermeiden. Beispielsweise ist es bekannt, die am Ende des Seiles befindliche Kupplungsvorrichtung zum Anhängen einer Last oder eines Werkzeuges mit einem Fangseil zu versehen, das mittels einer eigenen Wickelvorrichtung jeweils dem Tragseil folgt und bei Bruch des Tragseiles über eine Fliehkraftkupplung die Last auffangen und aufnehmen kann. Dies stellt eine relativ aufwendige Vorrichtung dar, bei der außerdem wiederum das Problem besteht, daß das Fangseil aufgrund seiner ständigen Bewegungen ebenfalls einem Verschleiß unterworfen ist und somit ebenfalls immer wieder kontrolliert werden müßte.

Es besteht deshalb die Aufgabe, eine Vorrichtung der eingangs genannten Art zu schaffen, bei der die spezielle Anordnung eines Fangseiles mit eigener Wickelvorrichtung vermieden werden kann, trotzdem aber eine willkürliche Auswechslung des Tragseiles oder eine unzureichende Überprüfung unterbleiben kann und das Tragseil dennoch nur im Falle eines Bruches ersetzt werden muß.

Die überraschende Lösung dieser scheinbar widersprüchlichen Aufgabe besteht darin, daß wenigstens zwei parallele oder im wesentlichen parallele Tragseile vorgesehen sind und die Seiltrommel eine der Anzahl der Tragseile entsprechende Zahl von jeweils nebeneinander angeordneten Rillen zur Aufnahme dieser Tragseile auf jeweils übereinstimmendem Durchmesser hat, wobei die an der Seiltrommel schraubenlinienförmig verlaufenden Rillen von ihrem Anfang bis zu dem Ende jeweils parallel zueinander angeordnet sind, und daß jedes der Tragseile eine der aufnehmenden Nennlast entsprechende oder diese übertreffende Reißfestigkeit hat.

Auf diese Weise ergibt sich also eine Vorrichtung zum Gewichtsausgleich, bei welcher unbesorgt so lange die jeweils gewünschten Gewichte oder Werkzeuge angehängt werden können, bis eines der Seile reißt oder bricht. Das zweite Seil ist dann im Hinblick auf seine Tragfähigkeit und die dabei jeweils noch eingerechneten üblichen Sicherheitsreserven in der Lage, die angehängte Last alleine zu tragen. Der Benutzer erhält jedoch durch den auftretenden Seilbruch das Signal, daß die Tragseile oder die gesamte Vorrichtung ausgetauscht werden müssen.

Falls der Benutzer ein derartiges deutliches Signal mißachten sollte, weil er der Auffassung ist, daß ja ein Tragseil die Last noch tragen kann, wird er dennoch zu einem Auswechseln gezwungen, weil das gerissene Seil bei der Betätigung der Seiltrommel nicht mehr richtig auf- und vor allem nicht mehr abgewickelt werden kann, weil an seinem freien Ende eine Zugkraft fehlt, so daß sich dieses gerissene Seil spätestens bei einem einer vielleicht noch funktionierenden Aufwickelung folgenden Abwicklungsvorgang durch die damit einhergehende Durchmesservergrößerung zwischen Seiltrommel und Gehäuse verklemmt und die Wirkungsweise der Vorrichtung stört oder sogar die Vorrichtung stillsetzt.

In vorteilhafter Weise wird durch die erfindungsgemäße Anordnung von wenigstens zwei parallel aufgewickelten und abwickelbaren Tragseilen die Sicherheit erheblich vergrößert, weil jedes Tragseil schon alleine, insbesondere unter Berücksichtigung üblicher Sicherheitsreserven, in der Lage ist, die jeweilige Last zu tragen, so daß mit einer solchen Vorrichtung auch über Kopf gearbeitet werden kann und darf.

Eine besonders zweckmäßige Ausgestaltung der Erfindung, die vor allem auch eine möglichst gleichmäßige Verteilung der Last auf die mehreren, insbesondere zwei Tragseile ermöglicht und gleichzeitig dazu beiträgt, den sich ändernden wirksamen Radius an der Seiltrommel bei zunehmender Abwicklung der Tragseile von der konischen Seiltrommel zu berücksichtigen, kann darin bestehen, daß unterhalb des an dem Gehäuse vorgesehenen Durchtrittes für die Tragseile eine SeilführungmitinsbesonderevoneinandergetrenntenFührungsöffnungen für die einzelnen Tragseile angeordnet ist, die an einem Pendel befestigt ist, welches vorzugsweise um die Drehachse der Seiltrommel verschwenkbar ist. Wenn sich bei zunehmendem Ablassen der Tragseile der wirksame Trommeldurchmesser vergrößert, wandern die Tragseile mehr und mehr von der Mittelachse der Seiltrommel gesehen nach außen. Dem kann die Seilführung aufgrund ihrer Befestigung an dem Pendel problemlos folgen. Die Seilführung selbst hat dabei den erheblichen Vorteil, daß sie eine gegenseitige Verdrillung der Tragseile ausschließt, die ohne eine solche Seilführung möglich ist und dem Benutzer eines anhängenden Werkzeuges eine erhebliche Geschicklichkeit abverlangen würde.

Das die Seilführung tragende Pendel kann aus zwei Armen bestehen, die mit Abstand zueinander an derselben Achse, insbesondere an der Achse der Seiltrommel, bevorzugt an den einander entgegengesetzten und überstehenden Enden der Achse der Seiltrommel angelenkt sind, und die Seilführung kann zwei beabstandete Befestigungsstellen für diese beiden Arme aufweisen, zwischen denen die Führungsöffnungen für die Tragseile angeordnet sind. Dabei ist es günstig, wenn die beiden Arme des Pendels an den Stirnseiten der Seilführung befestigt sind, diese sich also zwischen den beiden Armen befindet. Dies ergibt insgesamt eine stabile Aufhängung der Seilführung, die die zu erwartenden Seitenkräfte gut aufnehmen oder übertragen kann.

Um den Verschleiß der Seilführung im Bereich ihrer Führungsöffnungen möglichst kleinzuhalten, kann die Seilführung zum Ausgleich der Pendelbewegungen ihrerseits an dem Pendel oder den Pendelarmen dreh- oder schwenkbar befestigt oder gelagert sein. Die Auslenkung des Pendels gegenüber einer vertikalen Lage kann dann an den Führungsöffnungen durch eine entsprechende Gegenschwenkung der Seilführung weitgehend ausgeglichen werden.

Eine weitere zweckmäßige Ausgestaltung der Erfindung kann darin bestehen, daß die Seilführung oder wenigstens ein die Führungsöffnungen für die Tragseile aufweisendes Teil der Seilführung aus verschleißfähigem Material besteht und austauschbar ist. Denkbar wären zum Beispiel in die Führungsöffnungen eingesetzte Hülsen, die relativ leicht entfernt und ersetzt werden können, wenn sie zu sehr verschlissen sind. Dadurch werden die Tragseile selbst geschont, denn der Verschleiß wird gewissermaßen von den Tragseilen in die Seilführung verlegt. Gleichzeitig läßt sich der Verschleiß der Seilführung sogar optisch, also sehr einfach kontrollieren, während der Verschleiß der Tragseile schwerer erkennbar ist.

Die Seilführung kann eine der Anzahl der Tragseile entsprechende Zahl von jeweils voneinander getrennten Führungsöffnungen für-die einzelnen Tragseile haben, deren Abstand gleich oder etwas größer als der Abstand der Rillen der Seiltrommel und damit der Tragseile auf der Seiltrommel sein kann. Dadurch kann erreicht werden,-daß die Tragseile auch beim Aufwickeln gut wieder zu den sie jeweils aufnehmenden parallelen Rillen geführt werden, so daß auch der nächste Abwicklungsvorgang ungestört erfolgen kann. Dennoch erhält der Benutzer ein definiertes Ende aller Tragseile für das Anbringen einer Anhängevorrichtung.

An dem von der Seiltrommel abzuwickelnden freien Ende der Tragseile können jeweils Seilschlösser mit in Querrichtung verlaufenden Lochungen oder Bohrungen oder Seilschlaufen - die jeweils von den Tragseilen gebildet sind - vorgesehen sein, welche einen gemeinsamen, gegenüber den Seilschlössern drehbaren Lagerstift oder Lagerbolzen aufnehmen, an welchem ein Kupplungsteil mit Lastaufnahmekörbe, z.B. Anhängeöse oder zum Anbringen einer Anhängeöse oder ein Aufhängehaken oder dergleichen befestigt sein kann. Über die Seilschlösser und den Lagerstift oder Lagerbolzen kann also eine gleichmäßige Verteilung der anzuhängenden Last auf beide Tragseile erzielt werden.

Besonders günstig ist es dabei, wenn das mit dem Lagerstift oder Lagerbolzen verbundene Kupplungsteil gabelförmig ausgebildet ist und mit dem Lagerstift oder Lagerbolzen beidseits der Seilschlösser insbesondere drehbar und vorzugsweise lösbar verbunden ist. Sollten die beiden Tragseile durch die Fertigung oder im Laufe der Zeit durch die Belastung Längenunterschiede haben, kann dies automatisch durch eine entsprechende Schrägstellung des Bolzens ausgeglichen werden.

Eine besonders vorteilhafte weitere Ausgestaltung der Erfindung kann darin bestehen, daß das Kupplungsteil mit einem Lagervorsprung zwischen der Angriffsstelle der beiden Tragseile an dem Lagerbolzen angreift und der Lagerbolzen gegenüber diesem Kupplungsteil insbesondere beidseitig vorsteht und um eine in Gebrauchstellung horizontale, quer oder rechtwinklig zu dem Lagerbolzen verlaufende Achse, insbesondere im wesentlichen frei, schwenkbar ist. Dadurch kann erreicht werden, daß bei unterschiedlich langen Tragseilen bzw. in unterschiedlichen Höhen an den Tragseilen angeordneten Seilschlössern oder Schlaufen sich der Lagerbolzen automatisch durch eine Verschwenkung in eine Schräglage an solche unterschiedlichen Höhenlagen anpaßt und trotz dieser unterschiedlichen Höhenlagen die Kraft von einem Lastaufnahmekörper, beispielsweise einer Anhängeöse oder einem Haken, weitgehend gleichmäßig auf beide Tragseile verteilt. Somit ist es nicht erforderlich, die Enden der Tragseile mit höchster Präzision auf eine übereinstimmende Höhenlage einzujustieren, sondern diesbezügliche geringfügige Abweichungen können automatisch durch eine entsprechende Verschwenkung auf sehr einfache Weise ausgeglichen werden.

Besonders zweckmäßig ist es dabei, wenn das Kupplungsteil und der Bolzen mittels eines Kugelgelenkkopfes miteinander verbunden sind, wobei der Kugelgelenkkopf eine Bohrung oder Öffnung für den Durchtritt des Bolzens hat und mit seiner Kugelfläche an einer negativen Kugelfläche innerhalb des Kupplungsteiles schwenkbar, ggfs. auch drehbar, angreift. Der Ausgleich unterschiedlicher

Höhenlagen der Enden der Tragseile kann somit leichtgängig in der Verbindung zwischen Lagerbolzen und Kupplungsteil erfolgen, so daß an dem Lagerbolzen angreifende Lastaufnahmekörper nicht ihrerseits entsprechende Gelenke oder Schwenkmöglichkeiten enthalten müssen.

Eine weitere sehr vorteilhafte Ausgestaltung der Erfindung kann darin bestehen, daß der Lastaufnahmekörper an dem Kupplungsteil um eine vertikale Achse drehbar gelagert ist. Dabei ist es vor allem zweckmäßig, wenn das Kupplungsteil unterhalb des Lagerbolzens den Lastaufnahmekörper, z.B. eine Lastaufnahmegabel oder- glocke, trägt, welcher Lastaufnahmekörper mit dem Kupplungsteil um eine vertikale Achse drehbar verbunden ist, und an welchem eine Aufhängeöse, ein Lasthaken oder dergleichen befestigt ist oder welcher selbst eine Aufhängeöse, ein Lasthaken oder dergleichen ist.

Durch diese Drehbarkeit des Lastaufnahmekörpers und damit der Anhängeöse oder des Anhängehakens relativ zum Kupplungsteil kann die angehängte Last beliebig verdreht werden, ohne daß dadurch die beiden Tragseile miteinander verdrillt werden können. Darüber hinaus ergibt sich dadurch die Möglichkeit, das Gehäuse der Vorrichtung selbst in beliebiger Weise, also auch drehbar aufzuhängen, ohne daß die Gefahr besteht, daß die beiden Tragseile durch irgendeine dadurch ermöglichte Drehbewegung miteinander verdrillt werden.

Zum Begrenzen der Aufwickelbewegung der Tragseile auf die Seiltrommel kann eines der Tragseile eine Seilklemme als Anschlag für die oberste Position insbesondere gegenüber der Seilführung tragen, während das oder die weiteren Tragseile ohne eine solche Seilklemme bleiben können. Dies ist möglich, weil die Tragseile gleichzeitig und parallel aufgewickelt werden und der Anschlag eines Tragseiles die weitere Drehbewegung der Seiltrommel unterbindet. In vorteilhafter Weise wird also vermieden, daß das oder die weiteren Tragseile mit einem deren Lebensdauer einschränkenden Teil, nämlich einer Seilklemme versehen werden muß.

Dabei kann es zweckmäßig sein, wenn zwischen der Seilführung und der Seilklemme ein Puffer angeordnet ist, der das Anschlagen der Seilklemme an der Seilführung dämpft oder abfedert. Dieser Puffer kann zumindest von dem die Seilklemme aufweisenden Tragseil, vorzugsweise von allen Tragseilen, durchsetzt sein und insbesondere mit der Seilklemme und dem Tragseil auf- und abbewegbar sein. Somit wird dieser Puffer praktisch zu einem Bestandteil des von der Seilklemme gebildeten Anschlages und bewirkt an den Tragseilen keine Reibung, die auftreten würde, wenn der Puffer Bestandteil der Seilführung wäre.

Insgesamt ergibt sich eine Vorrichtung zum Ausgleichen des Gewichtes hängender Lasten von hoher Sicherheit für die Benutzer, so daß auch über Kopf damit gearbeitet werden kann. Sollte ein Tragseil so weit verschlissen sein, daß es reißt, kann die Last dennoch nicht herabfallen, weil das oder die weiteren Tragseile sie weiterhin halten. Dennoch wird für den Benutzer deutlich, daß die Tragseile oder die ganze Vorrichtung ausgetauscht werden müssen. Somit können bei gesteigerter Sicherheit ständige Kontrollen vermieden werden. Trotzdem wird das Arbeiten mit dieser Vorrichtung nicht unbequem, weil Vorsorge gegen ein Verdrillen der mehreren Tragseile miteinander vermieden werden kann.

Nachstehend sind Ausführungsbeispiele der Erfindung anhand der Zeichnung näher beschrieben. Es zeigt in zum Teil schematisierter Darstellung:
- Fig.1: eine teilweise im Schnitt gehaltene Seitenansicht einer erfindungsgemäßen Vorrichtung zum Gewichtsausgleich mit zwei parallel zueinander auf einer konischen Seiltrommel angeordneten und durch Drehung von dieser ablaßbaren Tragseilen, die unterhalb eines Durchtrittes durch das Gehäuse der Seiltrommel durch eine pendelnd ausgehängte Seilführung laufen,
Fig.2 einen Querschnitt durch die Aufhängung der Seilführung mit Draufsicht dieser Seilführung gemäß der Schnittlinie II-II in Fig.1,
Fig.3 eine Seitenansicht der Vorrichtung gemäß Fig.1,
Fig. 4 in vergrößertem Maßstab und teilweise im Schnitt eine Ansicht des unteren Endes der beiden Tragseile und ihrer Verbindung mit einem Lastaufnahmekörper, sowie
Fig. 5 eine Seitenansicht der Anordnung gem. Fig. 4.

Eine im ganzen mit 1 bezeichnete Vorrichtung zum Ausgleich des Gewichtes einer hängenden Last, also ein sogenannter "Gewichtsausgleicher", der dabei die Form eines Federzuges hat, weist eine Seiltrommel 2 und zwei gegen die Kraft einer als Gewichtsausgleich dienenden, in der Zeichnung nicht näher dargestellten Feder davon abwickelbare Tragseile 3 sowie ein Gehäuse 4 auf, in welchem die Seiltrommel 2 drehbar gelagert ist.

In ihrem oberen Bereich hat die Vorrichtung 1 an ihrem Gehäuse 4 eine Aufhängung 5, mit der sie beispielsweise an einem Arbeitsplatz in einer benötigten Position angeordnet werden kann. Das auszugleichende Gewicht kann das Gewicht eines Werkzeuges, zum Beispiel das einer Schweißzange sein, welches am unteren Ende der Tragseile 3 in noch zu beschreibender Weise anhängbar ist.

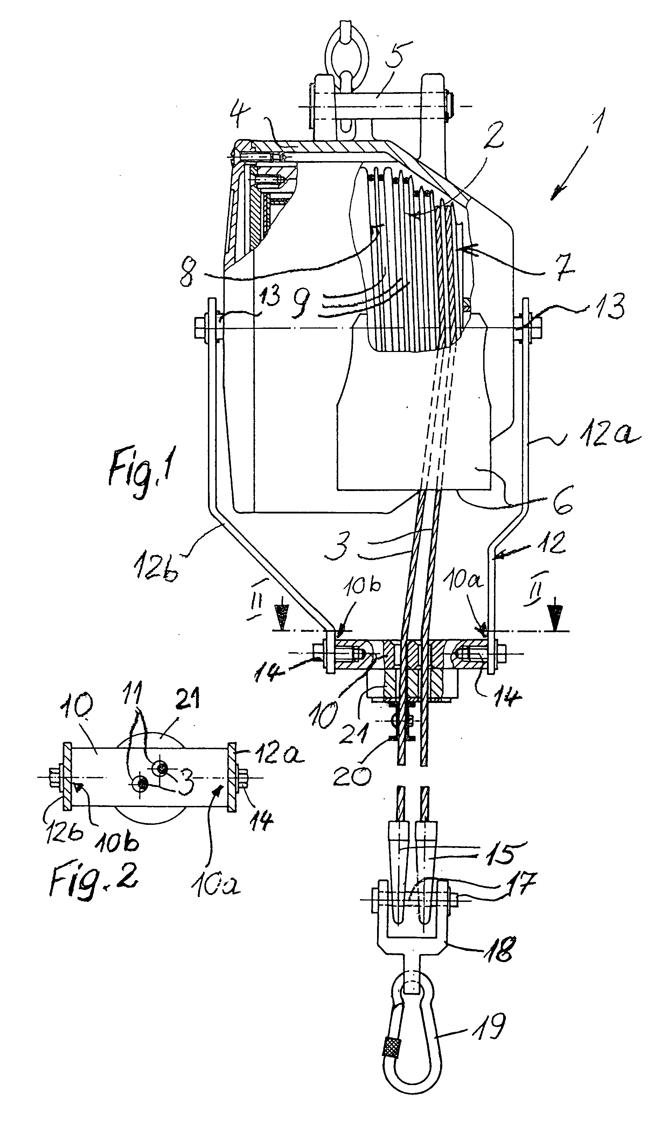

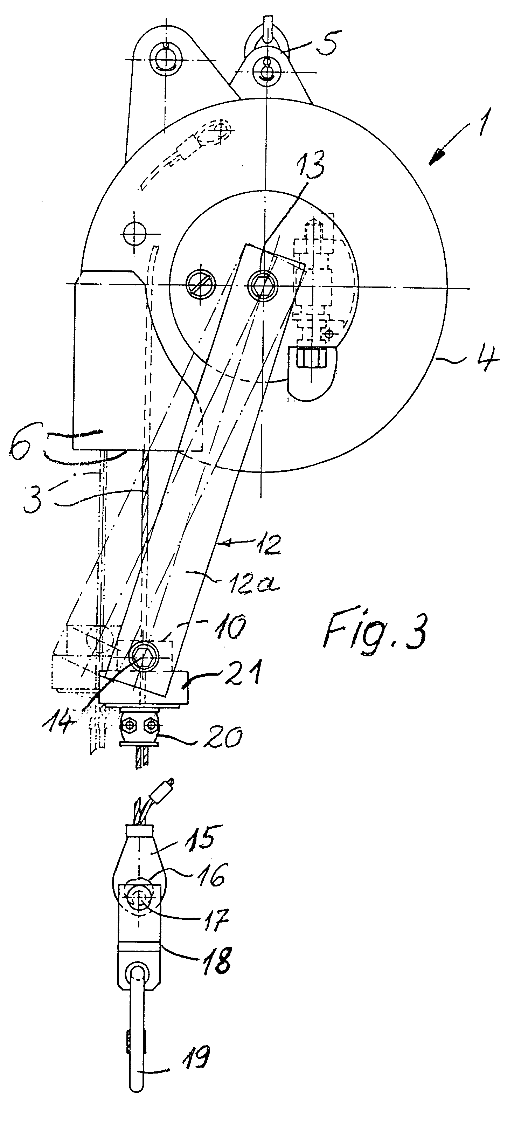

Im unteren Bereich etwa tangential zu dem Gehäuse 4 und zu der Seiltrommel 2 hat das Gehäuse 4 einen Durchtritt 6 für die nach unten austretenden Tragseile 3, der dabei eine Abmessung hat, die berücksichtigt, daß die Seiltrommel 2 einen vom Ende des Tragseilwickels 7 bis zu der Seite 8 des beim Ablassen der Tragseile 3 zuletzt abzuwickelnden Seilteiles zunehmenden Durchmesser aufweist. Vor allem in Fig.1 erkennt man deutlich die daraus resultierende konische Form der Seilrolle 2. Gleichzeitig wird dadurch deutlich, daß der Durchtritt 6 sowohl in axialer Richtung eine das Abwickeln genügend große Abmessung benötigt, weil die austretenden Tragseile 3 beim Abwickeln der Form der Seiltrommel 2 folgend mehr und mehr von dem Ende des Tragseilwickels 7 aus zu der Seite 8 hin wandern, wobei sie gleichzeitig auf einen immer größeren Durchmesser kommen, so daß auch in Querrichtung eine ausreichende Abmessung des Durchtrittes 6 erforderlich, was in Fig.3 angedeutet ist.

Wie bereits erwähnt, sind im Ausführungsbeispiel zwei parallele, im Bereich des Durchtrittes im wesentlichen parallele Tragseile 3 vorgesehen und die Seiltrommel 2 hat eine dieser Anzahl der Tragseile 3 entsprechende Zahl von parallel nebeneinander schraubenlinienförmig angeordneten Rillen 9 zur Aufnahme dieser Tragseile 3 auf jeweils übereinstimmendem Durchmesser. Die an der Seiltrommel 2 schraubenlinienförmig verlaufenden Rillen 9 sind von ihrem Anfang, also vom Ende des Tragseilwickels 7 aus, bis zu dem Ende, also der Seite 8 hin jeweils parallel zueinander angeordnet, so daß beide Tragseile 3 gleichzeitig, mit gleicher Länge und synchron auf- und abgewickelt werden können. Dabei hat jedes der Tragseile 3 eine etwa der aufzunehmenden Nennlast entsprechende oder diese um einen Sicherheitsfaktor übertreffende Reißfestigkeit, das heißt jedes Tragseil kann die aufzunehmende Last auch alleine tragen. Dadurch ist es möglich, die Tragseile 3 zu benutzen, bis eines von ihnen deutlich sichtbar verschlissen ist oder sogar reißt, ohne daß eine Gefahr für den Benutzer besteht. Aufwendige Kontrollen können also weitestgehend eingespart werden.

Unterhalb des an dem Gehäuse 4 vorgesehenen Durchtrittes 6 ist eine im ganzen mit 10 bezeichnete Seilführung angeordnet, die gemäß Fig.2 voneinander getrennte Führungsöffnungen 11 für die einzelnen Tragseile 3 aufweist. Diese Seilführung 10 ist gemäß den Figuren 1 und 3 an einem Pendel 12 befestigt, dessen verschiedene Schwenk- oder Pendelpositionen in Fig.3 dargestellt sind. Mit durchgezogenen Strichen ist die Ausgangslage bei hochgezogenen Tragseilen 3, also die auch in Fig.1 erkennbare Anordnung gezeichnet, während die strichpunktierten Linien eine abgelassene Position bedeuten, in welcher die Tragseile 3 abgelassen sind und somit von einem Bereich größeren Durchmessers der Seiltrommel 2 tangential nach unten abgehen. Die Seilführung 10 kann also dem zunehmenden Wickeldurchmesser der Seiltrommel 2 beim Ablassen der Tragseile 3 auf einfache Weise Rechnung tragen und in allen Zwischenpositionen sowie auch vor allem der abgewickelten Endposition ein gegenseitiges Verdrehen und Verdrillen der Tragseile 3 auf einfache und dennoch effektive Weise verhindern.

Das die Seilführung 10 tragende Pendel 12 besteht im Ausführungsbeispiel gemäß Fig.1 aus zwei Armen 12a und 12b, die mit Abstand zueinander an derselben Achse, im Ausführungsbeispiel der Achse 13 der Seiltrommel 2 an den einander entgegengesetzten Enden dieser Achse 13 und außerhalb des Gehäuses 4 schwenkbar angelenkt sind. Die Seilführung 10 hat ihrerseits zwei beabstandete Befestigungsstellen 10a und 10b für diese beiden Arme 12a und 12b, zwischen denen die Führungsöffnungen 11 für die Tragseile 3 angeordnet sind. Dabei ist im Ausführungsbeispiel vorgesehen, daß die beiden Arme 12a und 12b des Pendels 12 an den Stirnseiten der Seilführung 10 befestigt sind, diese also zwischen sich aufnehmen, so daß eine einfache Befestigung mit von der Stirnseite der Seilführung 10 aus wirksamen Befestigungsschrauben 14 möglich ist. Gegebenenfalls könnte an dieser Stelle die Seilführung 10 zum Ausgleich der Pendelbewegungen ihrerseits an dem Pendel 12 oder den Pendelarmen 12a und 12b dreh- oder schwenkbar befestigt oder gelagert sein.

Es sei noch erwähnt, daß die Seilführung 10 in äquivalenter Weise statt mittels eines Pendels schwenkbar auch in geeigneter Weise quer zur Achse 13 der Seiltrommel 2 verschiebbar gelagert sein könnte, um der Lageänderung der Tragseile 3 bei dem Abwickeln folgen zu können.

In Fig.1 ist gut erkennbar, daß die Seilführung 10 sehr leicht ausgetauscht werden kann, indem die Befestigungsschrauben 14 gelöst werden. Somit kann die Seilführung 10 oder wenigstens ein die Führungsöffnungen 11 aufweisendes Teil der Seilführung 10 aus verschleißfähigem Material bestehen und austauschbar sein. Dadurch können die Seile 3 gegen einen auf Reibung beruhenden Verschleiß relativ zu der Seilführung 10 geschützt werden.

Die Seilführung 10 hat eine der Anzahl der Tragseile 3 entsprechende Zahl von jeweils voneinander getrennten Führungsöffnungen 11 für die einzelnen Tragseile 3, das heißt im Ausführungsbeispiel sind zweiderartigevoneinandergetrennteFührungsöffnungenll vorgesehen, deren Abstand gleich oder etwas größer als der Abstand der Rillen 9 der Seiltrommel 2 und damit der Tragseile 3 auf der Seiltrommel 2 ist. Die Seilführung 10 hat also nicht nur die Aufgabe, die Tragseile 3 an einer gegenseitigen Verdrillung zu hindern, sondern kann diese auch auf einen geringfügig größeren Abstand zueinander bringen, um eine einfachere Befestigung der Last bzw. der dazu erforderlichen Seilschlösser usw. zu bringen.

Vor allem in Fig.1 erkennt man deutlich, daß an dem von der Seiltrommel 2 abzuwickelnden freien Ende der Tragseile 3 jeweils Seilschlösser 15 mit in Querrichtung verlaufenden Lochungen 16 (Fig.2) oder Bohrungen vorgesehen sind, welche einen gemeinsamen, gegenüber den Seilschlössern 15 insbesondere drehbaren Lagerstift oder Lagerbolzen 17 aufnehmen, an welchem ein Kupplungsteil 18 mit Aufhängeöse oder zum Anbringen einer Aufhängeöse 19 oder einem Aufhängehaken oder dergleichen befestigt ist. Dabei ist dieses Kupplungsteil 18 gabelförmig ausgebildet und mit dem Lagerstift oder Lagerbolzen 17 beidseits der Seilschlösser 15 insbesondere drehbar und vorzugsweise lösbar verbunden. Vor allem anhand der Fig.2 wird deutlich, daß beim Anhängen einer Last an die Aufhängeöse 19 also über das Kupplungsteil 18 die Kraft gleichmäßig auf die Tragseile 3 übertragen werden kann, selbst wenn diese geringfügig untgerschiedliche Längen haben, sei es durch ihre Herstellung, sei es durch etwas verschiedene Dehnungen bei ihrer Belastung, weil sich dann der Lagerbolzen 17 automatisch gegenüber der in Fig.1 erkennbaren horizontalen Lage schrägstellen kann.

Der scheinbare Mehraufwand, zwei Tragseile 3 vorzusehen, wird also mehr als wettgemacht, weil diese jeweils entsprechend geringer belastet werden und dadurch eine längere Lebensdauer haben und vor allem die lästigen oder aufwendigen Kontrollen weitestgehend entfallen könnten, da auch ein Tragseil 3 alleine die aufzunehmende Last tragen könnte, also beim Bruch eines der Tragseile 3 die Last immer noch gehalten wird. Der Bruch oder der deutlich sichtbare Verschleiß eines der Tragseile 3 kann also als Kontrolle ausreichen. Sollte eines der Tragseile 3 reißen, ist der Benutzer praktisch gezwungen, die Tragseile 3 oder die Vorrichtung 1 auszutauschen, weil das nicht mehr unter Zugspannung stehende Tragseil 3 schon beim Aufwickeln, spätestens aber beim nächsten Abwickelvorgang zu einer Verklemmung zwischen Seiltrommel 2 und Gehäuse 4 in dessen Innerem führen wird, weil ein solches unbelastetes Tragseil 3 nicht mehr in die Rille 9 gezogen wird.

In Fig.1 und 3 erkennt man ferner, daß zum Begrenzen der Aufwickelbewegung der Tragseile 3 auf die Seiltrommel 2 nur eines der Tragseile 3 eine Seilklemme 20 als Anschlag für die oberste Position insbesondere gegenüber der Seilführung 10 trägt. Dies reicht, um die von einer Feder bewirkte Aufwickelbewegung der Seiltrommel 2 zu unterbinden, weil beide Tragseile 3 gleichzeitig aufgewickelt werden. Somit bleibt eines der Tragseile 3 von einer derartigen Seilklemme 20 frei, die einerseits montiert werden muß und andererseits auch die Befestigungsstelle dieses Tragseiles 3 belastet.

In den Figuren 1 und 3 erkennt man deutlich, daß zwischen der Seilführung 10 und der Seilklemme 20 ein Puffer 21 angeordnet ist, so daß die Seilklemme 20 nicht unmittelbar an der Seilführung 10 anschlägt, sondern eine solche Anschlagbewegung durch den Puffer 21 gedämpft oder abgefedert wird.

Dabei verdeutlichen vor allem die Figuren 1 und 2, daß der Puffer 21 nicht nur von dem die Seilklemme 20 aufweisenden Tragseil, sondern von beiden Tragseilen 3 an entsprechenden Lochungen durchsetzt ist. In vorteilhafter Weise ist dabei dieser Puffer 21 mit der Seilklemme 20 und damit mit den Tragseilen 3 auf- und abbewegbar, das heißt es findet zwischen den Tragseilen 3 und diesem Puffer 21 keine Relativbewegung, also auch keine störende Reibung statt. Gleichzeitig bewirkt dieser die Tragseile 3 jeweils umschließende Puffer 21, daß sie auch nahe den Seilschlössern 15 in bleibendem Abstand und in bleibender Relation zueinander gehalten werden, also auch beim Ablassen auf größtmögliche Länge gegeneinander festgelegt bleiben. Der Puffer 21 hat somit praktisch eine Doppelfunktion, indem er auch zur gegenseitigen Lagestabilisierung der beiden Tragseile 3 an ihren unteren Enden beiträgt, ohne aber einen Ausgleich oder eine Ausgleichsbewegung im Bereich des Bolzens 17 aufgrund geringfügig unterschiedlicher Seillängen zu verhindern.

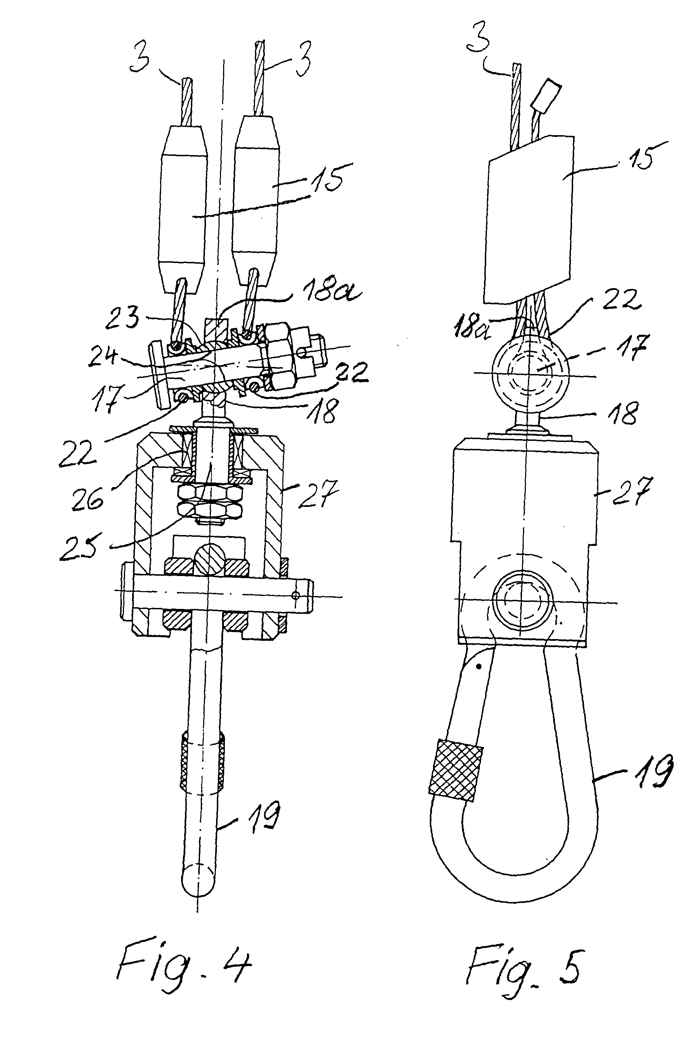

In den Fig. 4 und 5 ist eine hinsichtlich der Ausbildung und Befestigung eines Kupplungsteiles 18 abgewandelte Ausführungsform dargestellt:

Vor allem in Fig. 4 erkennt man, daß das Kupplungsteil 18 mit einem Lagervorsprung 18a zwischen den Angriffsstellen der beiden Tragseile 3 an dem Lagerbolzen 17 angreift, wobei der Angriff in diesem Falle mittels von den Seilschlössern 15 gebildeten und aus diesen hervortretenden Seilschlaufen 22 gebildet ist. Diese Seilschlaufen 22 greifen gem. Fig. 4 an zwei einander entgegengesetzten Endbereichen des Lagerbolzens 17 an und werden in dieser Position gegenseitig auf Abstand gehalten. Dabei verdeutlicht Fig. 4, daß der Lagerbolzen 17 gegenüber dem Kupplungsteil 18 und seinem Lagervorsprung 18a beidseitig vorsteht und um eine in Gebrauchsstellung horizontale, quer oder rechtwinklig zu dem Lagerbolzen 17, also senkrecht zur Zeichnungsebene der Fig. 4, verlaufende Achse schwenkbar ist. Fig. 4 zeigt eine derartige verschwenkte Position, die z.B. dadurch zustande kommt, daß die beiden Tragseile 3 und deren Seilschlösser 15 oder Schlaufen 22 etwas differierende Höhenlagen haben. Dennoch kann das Kupplungsteil 18 vertikal darunterhängen, d.h. solche unterschiedlichen Höhenlagen der Enden der Tragseile 3 können automatisch ausgeglichen werden und ferner werden Kräfte und Lasten von der darunter befindlichen Aufhängeöse 19 weitgehend gleichmäßig auf beide Tragseile 3 übertragen und verteilt.

Im Ausführungsbeispiel sind für diese Schwenkbarkeit das Kupplungsteil 18 und der Lagerbolzen 17 mittels eines Kugelgelenkkopfes 23 miteinander verbunden, wobei der Kugelgelenkkopf 23 eine Bohrung 24 oder Öffnung für den Durchtritt des Bolzens 17 hat und mit seiner Kugelfläche an einer entsprechenden negativen Kugelfläche innerhalb des Kupplungsteiles 18 oder des Lagervorsprunges 18a schwenkbar - ggfs. auch drehbar - angreift. Fig. 4 macht deutlich, daß auf diese Weise beim Verschwenken des Lagerbolzens 17 der Kugelgelenkkopf 23 entsprechend verdreht wird und somit das Kupplungsteil 18 mit seinem Lagervorsprung 18a seine vertikale Position beibehalten kann.

Fig. 4 zeigt noch eine weitere günstige Ausgestaltung dieses Ausführungsbeispieles, wonach nämlich der Lastaufnahmekörper an dem Kupplungsteil 18 um eine vertikale Achse 25 drehbar in einem entsprechenden Axial-Radial-Lager 26 gelagert ist. Die Verdrehung einer angehängten Last kann also über dieses Drehlager 26 aufgefangen und von den Tragseilen 3 ferngehalten werden, so daß diese bei einer derartigen Verdrehung nicht miteinander verdrillt werden. Der Benutzer eines an der Vorrichtung 1 angehängten Werkzeuges braucht also bei dessen Handhabung nicht darauf zu achten, daß er Verdrehungen in einer Richtung durch entsprechende Gegenverdrehungen wieder rückgängig macht, sondern er kann beliebig oft in ein und derselben Richtung Drehbewegungen durchführen, ohne daß die Tragseile 3 dadurch miteinander verdrillt werden und weitere Verdrehungen in derselben Richtung behindern und ohne daß sie durch solche Verdrillungen beschädigt werden können.

Im Ausführungsbeispiel erkennt man, daß das Kupplungsteil 18 unterhalb des Lagerbolzens 17 den Lastaufnahmekörper, in diesem Falle eine Lastaufnahmeglocke 27 mittels des Radial-Axiallagers 26 trägt, so daß also diese Lastaufnahmeglocke 27 gegenüber dem Kupplungsteil 18 um die Achse 25 verdrehbar ist, wobei diese Achse 25 der Einfachheit halber mit dem Kupplungsteil 18 einstückig verbunden ist. An diesem im Ausführungsbeispiel als Lastaufnahmeglocke 27 ausgestalteten Lastaufnahmekörper ist die Aufhängeöse 19 befestigt, anstelle von welcher aber auch ein Lasthaken oder dergleichen vorgesehen sein könnte.

Selbstverständlich könnte aber auch die Aufhängeöse 19 oder ein Lasthaken selbst als Lastaufnahmekörper unmittelbar drehbar mit dem Kupplungsteil 18 verbunden sein.

Aufgrund der Drehbarkeit der Anhängeöse 19 gegenüber dem Kupplungsteil 18 und den Enden der beiden Tragseile 3 kann auch das Gehäuse 4 der Vorrichtung 1 in beliebiger, auch andersartiger Weise als in den Fig. 1 und 3 dargestellt, beispielsweise ebenfalls drehbar, aufgehängt werden, ohne daß daraus die Gefahr resultiert, daß die beiden Tragseile 3 miteinander verdrillt werden können. Somit wird dem Vorhandensein von wenigstens zwei gleichzeitig wirksamen Tragseilen 3 Rechnung getragen und dennoch dem Benutzer eine weitestgehend freie Handhabung einer angehängten Last ermöglicht, deren Kräfte dennoch gleichmäßig oder weitgehend gleichmäßig auf die Tragseile 3 verteilt werden können.

Insgesamt ergibt sich ein Gewichtsausgleicher oder Federzug, der auch relativ große Lasten, zum Beispiel Schweißzangen tragen kann und dabei sogar ein Arbeiten über Kopf erlaubt, weil durch die Verwendung mehrerer Tragseile 3 eine erheblich erhöhte Sicherheit gegen Seilbruch vorliegt. Selbst wenn eines der Tragseile 3 reißen sollte, kann das verbleibende Tragseil 3 die Last weiterhin halten und der Benutzer erhält ein deutliches Signal, daß er die Tragseile 3 oder die Vorrichtung 1 austauschen muß. Ständige Seilkontrollen während des Betreibes oder in Betriebspausen, die häufig von einer erheblichen Sorgfalt des Prüfers abhängen, können also entweder in erheblich größeren Zeitabständen durchgeführt werden oder sogar vollständig entfallen. Gleichzeitig werden aufwendige Zusatzvorrichtungen mit Fangseilen vermieden.

Die Vorrichtung 1 zum Ausgleich des Gewichtes einer hängenden Last, z.B. eines von Hand zu bedienenden Werkzeuges, enthält eine Seiltrommel 2 und wenigstens zwei parallele oder im wesentlichen parallele Tragseile 3, die auf einer entsprechenden Anzahl von parallel nebeneinander angeordneten Rillen 9 der Seiltrommel 2 auf jeweils übereinstimmendem Durchmesser gleichmäßig auf- und abgewickelt werden können. Jedes der Tragseile 3 hat dabei eine der aufzunehmenden Nennlast entsprechende oder diese übertreffende Reißfestigkeit, so daß erheblich größere Sicherheitsreserven vorhanden sind und auch beim Reißen eines Seiles das verbleibende Seil die Last weiter tragen kann. Durch die Verteilung der Last auf zwei Seile wird jedoch die Gefahr eines Seilrisses gleichzeitig vermindert.

## Patentansprüche

1. Vorrichtung (1) zum Ausgleich des Gewichtes einer hängenden Last, insbesondere eines von Hand zu bedienenden Werkzeuges, zum Beispiel einer Schweißzange, in Form eines Gewichtsausgleichers oder Federzuges, wobei die Vorrichtung eine Seiltrommel (2) und ein gegen die Kraft einer als Gewichtsausgleich dienenden Feder davon abwickelbares Tragseil (3) sowie ein Gehäuse (4) aufweist, in welchem die Seiltrommel drehbar gelagert ist und welches einen Durchtritt (6) für das nach unten austretende Tragseil (3) hat, wobei die Seiltrommel (2) insbesondere einen vom Ende des Tragseilwickels (7) bis zu der Seite (8) des beim Ablassen des Tragseiles (3) zuletzt abzuwickelnden Seilteiles zunehmenden Durchmesser aufweist, **dadurch gekennzeichnet, daß** wenigstens zwei parallele oder im wesentlichen parallele Tragseile (3) vorgesehen sind und die Seiltrommel (2) eine der Anzahl der Tragseile (3) entsprechende Zahl von nebeneinander angeordneten Rillen (9) zur Aufnahme dieser Tragseile (3) auf jeweils übereinstimmendem Durchmesser hat, wobei die an der Seiltrommel (2) schraubenlinienförmig verlaufenden Rillen (9) von ihrem Anfang bis zu dem Ende jeweils parallel zueinander angeordnet sind, und daß jedes der Tragseile (3) eine der aufzunehmenden Nennlast entsprechende oder diese übertreffende Reißfestigkeit hat.

2. Vorrichtung nach Anspruch 1, **dadurch gekennzeichnet, daß** unterhalb des an dem Gehäuse (4) vorgesehenen Durchtrittes (6) für die Tragseile eine Seilführung (10) mit insbesondere voneinander getrennten Führungsöffnungen (11) für die einzelnen Tragseile (3) angeordnet ist, die an einem Pendel (12) befestigt ist, welches vorzugsweise um die Drehachse (13) der Seiltrommel (2) verschwenkbar ist.

3. Vorrichtung nach Anspruch 2, **dadurch gekennzeichnet, daß** das die Seilführung (10) tragende Pendel (12) aus zwei Armen besteht, die mit Abstand zueinander an derselben Achse, insbesondere an der Achse (13) der Seiltrommel (2), bevorzugt an den einander entgegengesetzten Enden der Achse (13) der Seiltrommel (2) angelenkt sind, und daß die Seilführung (10) zwei beabstandete Befestigungsstellen für diese beiden Arme (12a, 12b) aufweist, zwischen denen die Führungsöffnungen (11) für die Tragseile (3) angeordnet sind.

4. Vorrichtung nach Anspruch 2 oder 3, **dadurch gekennzeichnet, daß** die beiden Arme (12a, 12b) des Pendels (12) an den Stirnseiten der Seilführung (10) befestigt sind.

5. Vorrichtung nach einem der Ansprüche 1 bis 4, **dadurch gekennzeichnet, daß** die Seilführung zum Ausgleich der Pendelbewegungen ihrerseits an dem Pendel (12) oder den Pendelarmen (12a, 12b) dreh- oder schwenkbar befestigt oder gelagert ist.

6. Vorrichtung nach einem der Ansprüche 1 bis 5, **dadurch gekennzeichnet, daß** die Seilführung (10) oder wenigstens ein die Führungsöffnungen (11) für die Tragseile aufweisendes Teil der Seilführung (10) aus verschleißfähigem Material besteht und austauschbar ist.

7. Vorrichtung nach einem der Ansprüche 1 bis 6, **dadurch gekennzeichnet, daß** die Seilführung (10) eine der Anzahl der Tragseile (3) entsprechende Zahl von jeweils voneinander getrennten Führungsöffnungen (11) für die einzelnen Tragseile (3) hat, deren Abstand gleich oder etwas größer als der Abstand der Rillen (9) der Seiltrommel (2) und damit der Tragseile (3) auf der Seiltrommel (2) ist.

8. Vorrichtung nach einem der Ansprüche 1 bis 7, **dadurch gekennzeichnet, daß** an dem von der Seiltrommel (2) abzuwickelnden freien Ende der Tragseile (3) jeweils Seilschlösser (15) mit in Querrichtung verlaufenden Lochungen (16) oder Bohrungen oder Seilschlaufen (22) vorgesehen sind, welche einen gemeinsamen, gegenüber den Seilschlössern (15) insbesondere drehbaren Lagerstift oder Lagerbolzen (17) aufnehmen, an welchem ein Kupplungsteil (18) mit Lastaufnahmekörper, z.B. Aufhängeöse oder zum Anbringen einer Aufhängeöse (19) oder ein Aufhängehaken oder dergleichen befestigt ist.

9. Vorrichtung nach einem der Ansprüche 1 bis 8, **dadurch gekennzeichnet, daß** das mit dem Lagerstift oder Lagerbolzen verbundene Kupplungsteil (18) gabelförmig ausgebildet ist und mit dem Lagerstift oder Lagerbolzen (17) beidseits der Seilschlösser (15) insbesondere drehbar und vorzugsweise lösbar verbunden ist.

10. Vorrichtung nach einem der Ansprüche 1 bis 8, **dadurch gekennzeichnet, daß** das Kupplungsteil (18) mit einem Lagervorsprung (18a) zwischen den Angriffsstellen der beiden Tragseile (3) an dem Lagerbolzen (17) angreift und der Lagerbolzen (17) gegenüber diesem Kupplungsteil (18) oder dem Lagervorsprung (18a) insbesondere beidseitig vorsteht und um eine in Gebrauchsstellung horizontale, quer oder rechtwinklig zu dem Lagerbolzen (17) verlaufende Achse, insbesondere im wesentlichen frei, schwenkbar ist.

11. Vorrichtung nach Anspruch 10, **dadurch gekennzeichnet, daß** das Kupplungsteil (18) oder sein Lagervorsprung (18a) und der Lagerbolzen (17) mittels eines Kugelgelenkkopfes (23) miteinander verbunden sind, wobei der Kugelgelenkkopf (23) eine Bohrung (24) oder Öffnung für den Durchtritt des Lagerbolzens (17) hat und mit seiner Kugelfläche an einer negativen Kugelfläche innerhalb des Kupplungsteiles (18) oder seines Lagervorsprunges (18a) schwenkbar, gegebenenfalls auch drehbar, angreift.

12. Vorrichtung nach einem der Ansprüche 1 bis 11, **dadurch gekennzeichnet, daß** der Lastaufnahmekörper an dem Kupplungsteil (18) um eine vertikale Achse (25) drehbar gelagert ist.

13. Vorrichtung nach einem der Ansprüche 1 bis 12, **dadurch gekennzeichnet, daß** das Kupplungsteil (18) unterhalb des Lagerbolzens (17) den Lastaufnahmekörper, z.B. eine Lastaufnahmegabel oder -glocke (27), trägt, welcher Lastaufnahmekörper mit dem Kupplungsteil (18) um eine vertikale Achse (25) drehbar verbunden ist, und an welchem eine Aufhängeöse (19), ein Lasthaken oder dergleichen befestigt ist oder welcher selbst eine Aufhängeöse (19), ein Lasthaken oder dergleichen ist.

14. Vorrichtung nach einem der Ansprüche 1 bis 13, **dadurch gekennzeichnet, daß** zum Begrenzen der Aufwickelbewegung der Tragseile (3) auf die Seiltrommel (2) eines der Tragseile (3) eine Seilklemme (20) als Anschlag für die oberste Position insbesondere gegenüber der Seilführung (10) trägt.

15. Vorrichtung nach Anspruch 14, **dadurch gekennzeichnet, daß** zwischen der Seilführung (10) und der Seilklemme (20) ein Puffer (21) angeordnet ist.

16. Vorrichtung nach Anspruch 14 oder 15, **dadurch gekennzeichnet, daß** der Puffer (21) zumindest von dem die Seilklemme (20) aufweisenden Tragseil, vorzugsweise von allen Tragseilen (3), durchsetzt ist und insbesondere mit der Seilklemme (20) und dem Tragseil (3) auf- und abbewegbar ist.

## Claims

1. An apparatus for balancing the weight of a hanging load, especially of a tool which is to be operated manually, for example welding tongs, in the form of a weight equilibrator or spring hoist, wherein the apparatus has a cable drum (2) and a cable (3) which can be unwound against the force of a spring which serves as a weight equilibrator, and a housing (4) in which the cable drum is rotatably mounted and which has an opening (6) for the cable (3) which emerges downwards, wherein the cable drum (2) especially has a diameter which increases from the end of the cable coil (7) to the side (8) of that part of the cable which unwinds last when the cable is unwound, **characterised in that** at least two parallel or substantially parallel cables (3) are provided and the cable drum (2) has a number, corresponding to the number of cables (3), of adjacently-disposed grooves (9) of corresponding diameter to accept these cables (3), wherein the grooves (9) extending helically on the cable drum (2) are each disposed parallel to one another from start to finish, and that each of the cables (3) has a breaking strength corresponding with, or greater than, the nominal load which is to be accepted.

2. An apparatus according to claim 1, **characterised in that** a cable guide (10) especially with separated guide openings (11) for the individual cables (3) is disposed below the opening (6) provided on the housing (4), a pendulum (12) being attached to said cable guide which can preferably be swivelled about the rotational axis of the cable drum (2).

3. An apparatus according to claim 2, **characterised in that** the pendulum (12) which supports the cable guide (10) comprises two arms which are attached to the same axle, especially to the axle (13) of the cable drum (2) at a distance from one another, preferably at the opposite ends of the axle (13) of the cable drum (2), and that the cable guide (10) has two attachment points, at a distance from one another, for these two arms (12a, 12b), between which the guide openings (11) for the cables (3) are disposed.

4. An apparatus according to claim 2 or 3, **characterised in that** the two arms (12a, 12b) of the pendulum (12) are attached on the face sides of the cable guide (10).

5. An apparatus according to one of claims 1 to 4, **characterised in that** the cable guide is attached or mounted so as to be turnable or swivellable on the pendulum (12) or on the pendulum arms (12a, 12b) to balance the pendulum movement.

6. An apparatus according to one of claims 1 to 5, **characterised in that** the cable guide (10), or at least one part of the cable guide (10) for the guide openings (11), comprises abradable material and can be replaced.

7. An apparatus according to one of claims 1 to 6, **characterised in that** the cable guide (10) has a number of separate guide openings (11) for the individual cables (3) which corresponds to the number of cables (3), the spacing between which is equal to, or somewhat greater than, the spacing of the grooves (9) of the cable drum (2) and hence the cables (3) on the cable drum (2).

8. An apparatus according to one of claims 1 to 7, **characterised in that** in each case, cable joints (15) with holes (16) or bores or cable slings (22) extending in the transverse direction are provided at the free end of the cable (3) which unwinds from the cable drum (2) and which accept a common bearing pin or bearing bolt (17) which can be especially be rotated with regard to the cable joints (15), on which a coupling part (18) is attached with a load-bearing device, e.g. lifting eyelet, or for attachment of a lifting eyelet (19) or lifting hook or similar.

9. An apparatus according to one of claims 1 to 8, **characterised in that** the coupling part (18) joined with the bearing pin or bearing bolt (17) is releasably attached, especially rotatably, on both sides of the cable joints (15).

10. An apparatus according to one of claims 1 to 8, **characterised in that** the coupling part (18) with a bearing projection (18a) between the engagement points of the two cables (3) engages on the bearing bolt (17) and the bearing bolt (17) especially projects on both sides with regard to this coupling part (18) or the bearing projection (18a) and can be swivelled, especially substantially freely, about an axle which extends horizontally, transversely or at right-angles to the bearing bolt (17) when in its position of use.

11. An apparatus according to claim 10, **characterised in that** the coupling part (18) or its bearing projection (18a) and the bearing bolt (17) are attached together by means of a ball pivot head (23), wherein the ball pivot head (23) has a bore (24) or opening to accept the bearing bolt (17) and engages in a swivelling manner, optionally also rotatably, with its ball surface on a negative ball surface within the coupling part (18) or its bearing projection (18a).

12. An apparatus according to one of claims 1 to 11, **characterised in that** the load-bearing device is rotatably mounted about a vertical axle (25) on the coupling part (18).

13. An apparatus according to one of claims 1 to 12, **characterised in that** the coupling part (18) underneath the bearing bolt (17) supports the load-bearing device, e.g. a load-bearing cradle or bell (27), this load-bearing device being rotatably connected with the coupling part (18) about a vertical axle (25) and on which a lifting eyelet (19), a load hook or similar is attached or which is itself a lifting eyelet (19), a load hook or similar.

14. An apparatus according to one of claims 1 to 13, **characterised in that** in order to limit the winding movement of the cable (3) on the cable drum (2), one of the cables (3) has a cable clamp (20) which serves as a detent for its highest position, especially with regard to the cable guide (10).

15. An apparatus according to claim 14, **characterised in that** a buffer (21) is disposed between the cable clamp (20) and the cable guide (10).

16. An apparatus according to claim 14 or 15, **characterised in that** the buffer (21) is passed through at least by the cable which has the cable clamp (20), preferably by all cables (3) and can especially move up and down with the cable clamp (20) and the cable (3).

## Revendications

1. Dispositif (1) pour équilibrer le poids d'une charge suspendue, en particulier d'un outil devant être actionné à la main, par exemple une pince de soudage, revêtant la forme d'un système d'équilibrage pondéral ou d'un palan à ressort, le dispositif comprenant un tambour enrouleur (2) et un câble de support (3) pouvant être dévidé dudit tambour, en s'opposant à la force d'un ressort assurant une compensation pondérale, ainsi qu'un boîtier (4) dans lequel le tambour enrouleur est monté à rotation, et qui comporte un passage (6) destiné au câble de support (3) sortant vers le bas, le tambour enrouleur (2) possédant notamment un diamètre croissant depuis l'extrémité du bobinage (7) du câble de support, jusqu'au côté (8) de la partie de câble devant être dévidée en dernier lors du défilement sortant dudit câble de support (3), **caractérisé par le fait qu'**on a prévu au moins deux câbles de support (3) parallèles ou sensiblement parallèles, et le tambour enrouleur (2) comprend un nombre de rainures juxtaposées (9) correspondant au nombre des câbles de support (3), en vue de recevoir ces câbles de support (3) sur un diamètre respectivement concordant, sachant que lesdites rainures (9), s'étendant hélicoïdalement sur le tambour enrouleur (2), sont respectivement agencées avec parallélisme mutuel depuis leur début jusqu'à leur fin ; et **par le fait que** chacun des câbles de support (3) présente une résistance à la rupture qui correspond à la charge nominale devant être absorbée, ou excède cette dernière.

2. Dispositif selon la revendication 1, **caractérisé par le fait qu'**un guide-câbles (10), implanté au-dessous du passage (6) prévu sur le boîtier (4) et destiné aux câbles de support, comporte des orifices de guidage (11) notamment séparés l'un de l'autre et affectés aux câbles individuels de support (3), et est fixé à une monture oscillante (12) pouvant pivoter, de préférence, autour de l'axe de rotation (13) du tambour enrouleur (2).

3. Dispositif selon la revendication 2, **caractérisé par le fait que** la monture oscillante (12), portant le guide-câbles (10), se compose de deux bras articulés à distance l'un de l'autre sur le même axe, en particulier sur l'axe (13) du tambour enrouleur (2), de préférence aux extrémités dudit axe (13) dudit tambour enrouleur (2) qui sont tournées à l'opposé l'une de l'autre ; et **par le fait que** le guide-câbles (10) comprend, pour ces deux bras (12a, 12b), deux zones distantes de fixation entre lesquelles se trouvent les orifices de guidage (11) affectés aux câbles de support (3).

4. Dispositif selon la revendication 2 ou 3, **caractérisé par le fait que** les deux bras (12a, 12b) de la monture oscillante (12) sont fixés aux faces extrêmes du guide-câbles (10).

5. Dispositif selon l'une des revendications 1 à 4, **caractérisé par le fait que** le guide-câbles est à son tour fixé ou monté avec faculté de rotation ou de pivotement, en vue de compenser les mouvements pendulaires, sur la monture oscillante (12) ou les bras oscillants (12a, 12b).

6. Dispositif selon l'une des revendications 1 à 5, **caractérisé par le fait que** le guide-câbles (10), ou au moins une partie dudit guide-câbles (10) munie des orifices (11) de guidage des câbles de support, est constitué(e) d'un matériau apte à l'usure et peut être remplacé(e).

7. Dispositif selon l'une des revendications 1 à 6, **caractérisé par le fait que** le guide-câbles (10) comporte des orifices de guidage (11) qui sont respectivement séparés les uns des autres, sont affectés aux câbles individuels de support (3), sont en nombre correspondant au nombre desdits câbles de support (3), et dont la distance est égale ou sensiblement supérieure à la distance entre les rainures (9) du tambour enrouleur (2) et, par conséquent, entre les câbles de support (3) sur ledit tambour enrouleur (2).

8. Dispositif selon l'une des revendications 1 à 7, **caractérisé par le fait que** des pince-câbles (15), respectivement prévus à l'extrémité libre des câbles de support (3) devant être dévidée du tambour enrouleur (2), présentent des trous (16) ou des perçages, ou bien des boucles de câbles (22) s'étendant dans le sens transversal et recevant un tenon commun de montage ou un tourillon commun de portée (17) qui peut notamment tourner vis-à-vis desdits pince-câbles (15) et auquel est fixée une pièce d'accouplement (18) munie d'un corps récepteur de charge, par exemple d'un mousqueton de suspension, ou conçue pour la mise en place d'un mousqueton de suspension (19) ou d'un crochet de suspension, voire d'un organe similaire.

9. Dispositif selon l'une des revendications 1 à 8, **caractérisé par le fait que** la pièce d'accouplement (18), reliée au tenon de montage ou tourillon de portée, est de réalisation fourchue et est reliée audit tenon de montage ou tourillon de portée (17), de part et d'autre des pince-câbles (15), notamment avec faculté de rotation et, de préférence, de manière libérable.

10. Dispositif selon l'une des revendications 1 à 8, **caractérisé par le fait que** la pièce d'accouplement (18) vient en prise avec le tourillon de portée (17) par une saillie de montage (18a), entre les zones de venue en prise des deux câbles de support (3), et ledit tourillon de portée (17) dépasse notamment de part et d'autre vis-à-vis de cette pièce d'accouplement (18) ou de la saillie de montage (18a) et peut notamment, pour l'essentiel, accomplir des pivotements libres autour d'un axe horizontal en position d'utilisation, et s'étendant transversalement ou perpendiculairement audit tourillon de portée (17).

11. Dispositif selon la revendication 10, **caractérisé par le fait que** le tourillon de portée (17), et la pièce d'accouplement (18) ou sa saillie de montage (18a), sont mutuellement solidarisés au moyen d'une tête d'articulation sphérique (23), ladite tête d'articulation sphérique (23) étant dotée d'un alésage (24) ou d'un orifice en vue du passage du tourillon de portée (17), et venant en prise avec faculté de pivotement, éventuellement aussi avec faculté de rotation, par sa surface sphérique, avec une surface sphérique complémentaire à l'intérieur de ladite pièce d'accouplement (18), ou de sa saillie de montage (18a).

12. Dispositif selon l'une des revendications 1 à 11, **caractérisé par le fait que** le corps récepteur de charge est monté rotatif sur la pièce d'accouplement (18), autour d'un axe vertical (25).

13. Dispositif selon l'une des revendications 1 à 12, **caractérisé par le fait que** la pièce d'accouplement (18) porte le corps récepteur de charge, par exemple une fourche ou une cloche (27) réceptrice de charge, au-dessous du tourillon de portée (17), lequel corps récepteur de charge est relié à ladite pièce d'accouplement (18) avec faculté de rotation autour d'un axe vertical (25), et offre une fixation à un mousqueton de suspension (19), à un crochet de charge ou à un organe similaire, ou bien constitue lui-même un mousqueton de suspension (19), un crochet de charge ou un organe similaire.

14. Dispositif selon l'une des revendications 1 à 13, **caractérisé par le fait que**, en vue de limiter le mouvement de renvidage des câbles de support (3) sur le tambour enrouleur (2), l'un desdits câbles de support (3) porte un serre-câble (20) en tant que butée pour la position supérieure extrême, notamment vis-à-vis du guide-câbles (10).

15. Dispositif selon la revendication 14, **caractérisé par le fait qu'**un tampon (21) est interposé entre le guide-câbles (10) et le serre-câble (20).

16. Dispositif selon la revendication 14 ou 15, **caractérisé par le fait que** le tampon (21) est traversé au moins par le câble de support muni du serre-câble (20), de préférence par tous les câbles de support (3), et peut en particulier monter et descendre avec ledit serre-câble (20) et ledit câble de support (3).
